# EUROPEAN PATENT SPECIFICATION

(11) **EP 2 776 747 B1**
(45) Date of publication and mention of the grant of the patent: **09.12.2015**
(21) Application number: 12780081.1
(22) Date of filing: 16.10.2012
(51) Int. Cl.: F16K 17/12, F16K 24/04, F16K 31/08, B65D 90/34

(54) **A VENTING VALVE FOR CARGO TANKS**
LÜFTUNGSVENTIL FÜR LADETANKS
SOUPAPE D'ÉVENT POUR CITERNES DE CARGAISON

(30) Priority: 09.11.2011 DK 201170611 P
(43) Date of publication of application: 17.09.2014
(73) Proprietor: Sørensen, Eric Aarestrup, Finchampstead, Wokingham RG40 3SS (GB)
(72) Inventor: MATZEN, Lars, DK-3600 Frederikssund (DK)
(74) Representative: Rørdam, Troels Peter
(86) International application number: PCT/DK2012/050385
(87) International publication number: WO 2013/068012

(56) References cited:
- WO-A2-2011/032561
- DE-B- 1 105 346
- US-A- 1 620 719
- US-A- 5 203 372
- US-A- 5 224 511
- US-A1- 2002 066 486

## Description

The invention relates to a venting valve intended for equalizing overpressure in cargo tanks in, for instance, oil tankers, wherein said valve comprises a valve housing with an axially movable valve body and a thereto associated valve seat, wherein the position of the valve body relative to the valve seat is dependent on the pressure in the cargo tank.

There are international regulations for type approval/test of equipment in connection with pressure valves for use in cargo tanks found onboard oil tankers. A substantial provision in these regulations is for the valve in a test set-up to show that valve oscillations having a frequency inferior to 0.5 Hz will at no point in time arise in consequence of an open/close cycle.

In order to comply with this problem, it is chosen to use valves with a large blow-down (the difference between the pressure at which the valve opens and the pressure at which the valve closes). One example of this is known from WO 93/16310, where a magnet is used to increase the opening pressure. However, this method has an undesirable effect, since a large amount of gas is let out each time the valve opens until the pressure in the tank has fallen to the level at which the valve closes. The disadvantage of the method is that the pressure in the tank has decreased to such an extent that the cargo boils off in order to re-establish its vapour pressure when the valve is closed again. This results in cargo loss as well as significant environmental pollution. The problem could be solved by using a valve with continuously increasing pressure loss, but such a valve would have a considerable size, resulting in unacceptable costs. Another known solution is a valve controlled by a so called pilot valve, whereby pressure increase is avoided and the amount of outlet gas is minimized. This is a correspondingly costly solution.

A further attempt at solving the above-mentioned problems has been made by using a valve as described in EP 1390650 A1. Such a valve is in addition to a magnet and a magnetizable body provided with a lifting plate arranged in the flow passage of the valve such as to define an area tranversally to the flow passage giving rise to a pressure loss in a flow of gas within the flow passage of the valve. However, such an arrangement results in a reduction of the blowout capacity of the valve, which in turn leads to cargo loss as the valve needs to remain open for a considerable period of time in order to vent out an overpressure.

A similar attempt at solving the above-mentioned problems has been made by using a valve as described in US 2007/0113902 A1. Such a valve is provided with an upper body, a lower body and a casket-shaped housing enclosing part of the lower body and part of the upper body such as to form a flow passage between the housing and the upper and lower body, respectively. The upper body comprises a weight and a lifting disc, the lifting disc being arranged on an end surface of the upper body facing the lower body. The lifting disc is in all positions of the valve arranged within the casket-shaped housing, and is therefore arranged in the flow passage of the valve to the same effect as that of EP 1390650 A1 described above. Thus, the valve according to US 2007/0113902 A1 has the same drawbacks as that of EP 1390650 A1 described above. WO 2011/032561 discloses a venting valve for cargo tanks according to the preamble of claim 1. US1620719 discloses a vent valve for a tank and comprising a shirt for permitting the valve to remain unsented until the pressure is lowered within the tank.

The valves are generally used to vent a tank during filling and the gases are, naturally, let out into the surrounding air. It is a necessity in order to fill up the tank.

Thermal pressure increases in the ship's tank arise during the ship's voyage, said pressure increases being, for instance, a consequence of solar heating. These pressure increases are also vented through the valve - it is in these situations that a large blow-down causes significant cargo loss and environmental pollution.

A cargo tank found onboard an oil tanker can only withstand relatively small overpressures, the limit is frequently around 25 kPa. At the same time, to maintain as high a pressure in the tank as possible in order to minimize boil-off and if the cargo is classified as toxic, the opening pressure of the pressure equalizing valve should be at least 20 kPa. This means that a very narrow pressure region is available for venting when one considers pressure drop over the pressure equalizing valve and pressure drop in the associated piping system.

The object of the invention is to provide a valve to be used for venting large as well as small amounts of gas, wherein the valve is a very simple mechanical unit that may also be used on a ship's deck, wherein the valve preferably doesn't oscillate inadmissibly and wherein the valve may operate within a narrow pressure region, the size of which is mentioned above as well as wherein the blowout capacity is increased and consequently the period of time in which the valve must be left open to vent out an overpressure is decreased or even minimized.

This object is achieved by a venting valve according to claim 1.

Thereby a venting valve is provided in which the lifting element does not take up space in the interior of the valve housing. This has been shown to lead to a valve having a venting effect which is increased when compared to prior art valves. By way of example, the venting effect has been shown to be increased by 25 % to 30 % when compared with a valve of the type described in EP 1390650 A1.

Furthermore, the capacity of the valve has been shown to be increased as well, from about 2500 m³/h for prior art valves to almost 3000 m³/h for a valve according to the invention. This in turn naturally leads to a valve which must be left open for a considerably shorter amount of time to vent out a given overpressure when compared to prior art valves, and thereby to a reduced cargo loss.

Preferred embodiments of the valve with the lifting element are given in the dependent claims 2 to 14.

In a particularly preferred embodiment the lifting element is arranged on the valve body where the circumference of the valve body is largest. Tests have shown that placing the lifting element in this particular position provides for the best possible lifting effect when compared to other positions on the valve body.

In a particularly preferred embodiment the second section of the lifting element comprises an inclination with respect to the first section, such that when the lifting element is connected to the valve body the second section is bent towards the valve seat, whereby the lifting element is provided with a shape enabling it to catch the gas stream released by the valve in a particularly efficient manner, which in turn provides an improved lifting effect.

In another particularly preferred embodiment the inner edge of the lifting element is provided with a shape adapted for following the contour of the outer circumferential part of the valve body along the complete circumference of the valve body, whereby a particularly good lifting effect is ensured in that a particularly high amount of the gas stream released by the valve may be catched by the lifting element.

In a preferred embodiment the valve body is hollow and adapted to receive a further valve body, and, for interaction with the further valve body, a further valve seat is provided at the end of the valve body that extends outside the valve, wherein the characteristics of the interacting valve body/valve seat and the further valve body/valve seat respectively are mutually different.

The one valve function is dimensioned for venting large amounts of gas, while the second valve function is dimensioned for venting small amounts of gas. For the sake of convenience a primary and a secondary valve will be discussed, where the primary valve comprises the valve body and the valve seat that are adapted to let out large amounts of gas and where the secondary valve comprises the further valve body and the further valve seat that are adapted, since the secondary valve is provided in the primary valve, to let out small amounts of gas.

The primary valve is realized with magnets, for instance as shown in WO 93/16310, but it may also comprise other means for adapting the valve to the current requirement. For instance, the valve body and the valve housing may, when viewed in an axial section, be shaped in such a way that the flow area between said parts is dependent on the position of the valve body in the valve housing, see for instance the valve known from US 5 060 688.

The properties of the valve may be changed by spring-loading the valve or by using the valve body's own weight to close the valve.

In a preferred embodiment, the secondary valve is arranged concentric with the primary valve. This means that the secondary valve body is concentrically arranged in the primary valve body and adapted for axial movement relative to the secondary valve seat that is provided at the end of the valve body that extends outside the valve and that channels are provided in the valve body in such a way that the pressure in the cargo tank actuates the secondary valve body away from the secondary valve seat.

The valve bodies may, in different embodiments, be spring-loaded, weight-loaded and/or adjustable in different ways.

By using magnets, it is, as mentioned above, desired to keep the valve closed up to a certain, increased, gas pressure, whereupon the primary valve opens up as much and as soon as possible. In a particular embodiment, the part of the valve body that is positioned outside the valve housing comprises a substantially cylindrical region that has larger diameter than a clearance hole in the valve seat and that is adapted to interact with a projecting skirt on the valve housing, wherein the outer contour of the cylindrical region corresponds to the inner contour of the skirt.

This construction results in the increased gas pressure on the primary valve body when the gas acts on the cylindrical region with larger diameter in such a way for the primary valve to open up faster. This embodiment incurs a particular advantage in connection with installations with a significant pressure loss, for instance, in consequence of long pipe connections between the storage tank and the valve.

The height of the skirt is adjusted according to the current requirements and may, in an embodiment, be approximately the half of the total stroke length of the valve body. Similarly, the diameter of the cylindrical region is adjusted according to the conditions and may, for instance, be approximately 10 % larger than the clearance hole of the valve seat.

The invention will be explained in more detail in the following description of embodiments that are shown in the drawings.
Fig. 1 is a section view of one embodiment of the valve according to the invention comprising a lifting element,
Fig. 2 shows the section A on fig 1 featuring the lifting element in an enlarged view,
Figs. 3a-3c show different configurations of a lifting element for a valve according to the invention,
Figs. 4a and 4b show two graphs illustrating a comparison of the relation between the pressure and the volume capacity as measured on a prior art valve and a valve according to the invention and as shown on Fig. 1, respectively, and
Fig. 5 shows a further embodiment of the valve according to the invention.

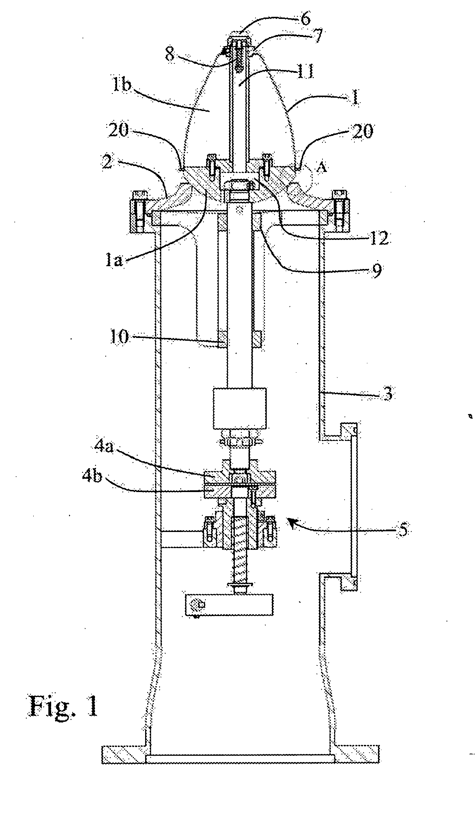

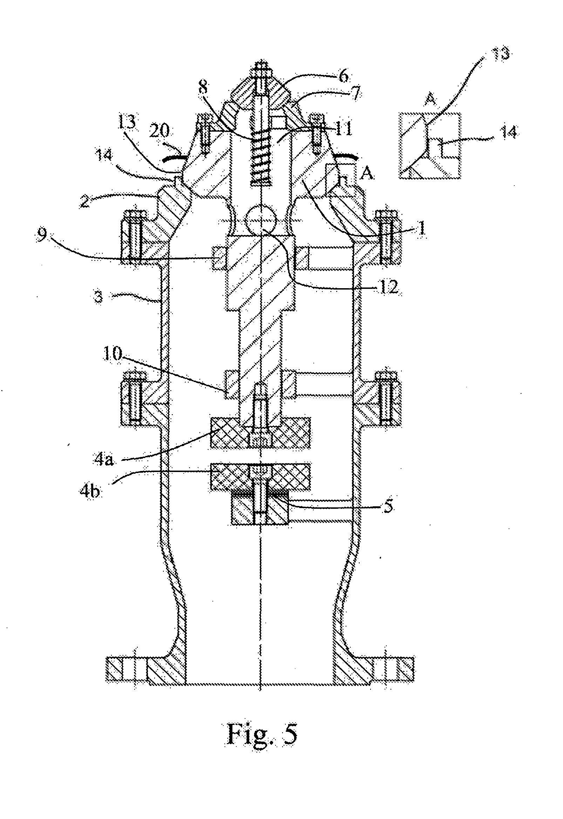

Fig 1 shows a valve housing 3 that is open towards the bottom, at which the housing is adapted to be attached to a cargo tank or a pipe of a cargo tank. The valve housing 3 has inner bearings 9, 10 for arranging a valve body 1 in order to make it movable up and down. In the lowermost position, or closed position, the valve body rests against a valve seat 2. The gas pressure in the tank forces the lower side of the valve body 1 to open in spite of the valve body's own weight and the force exerted by a couple of magnets 4a, 4b. The position of the magnets may be changed by means of an adjustment element 5, such as a screw arrangement as shown in fig. 1 or disks as shown on fig. 5, in order to adjust the valve to the current requirement.

The magnets 4a, 4b are provided on the valve body 1 and in the valve housing 3 respectively in such a way that the magnetic force seeks to hold the valve body 1 against the valve seat 2.

The lifting element 20 connected to the valve body 1 such as to extend completely around an outer circumferential part of the valve body 1. The lifting element 20 is in other words placed externally on the valve. Furthermore, the lifting element 20 is placed where the circumference or diameter of the valve body 1 is the largest.

More specifically, and as shown on Fig. 1, the valve body comprises a bottom part 1a and a top part 1b, and the lifting element 20 is placed on the valve body 1 held or wedged between the bottom part 1a and the top part 1b.

In an alternative embodiment the lifting element is arranged such as to extend completely around the valve body along an outer circumferential periphery of the valve body. In other alternative embodiments the lifting element is arranged such as to extend at least partially around the valve body along an outer circumferential periphery or an outer circumferential peripheral part of the valve body. In another alternative embodiment the lifting element is abutting or attached to the valve body. In yet another alternative embodiment the lifting element is arranged on a bottom part of the valve body in such a way that when the valve body rests against the valve seat, the lifting element is placed in a distance from the valve seat.

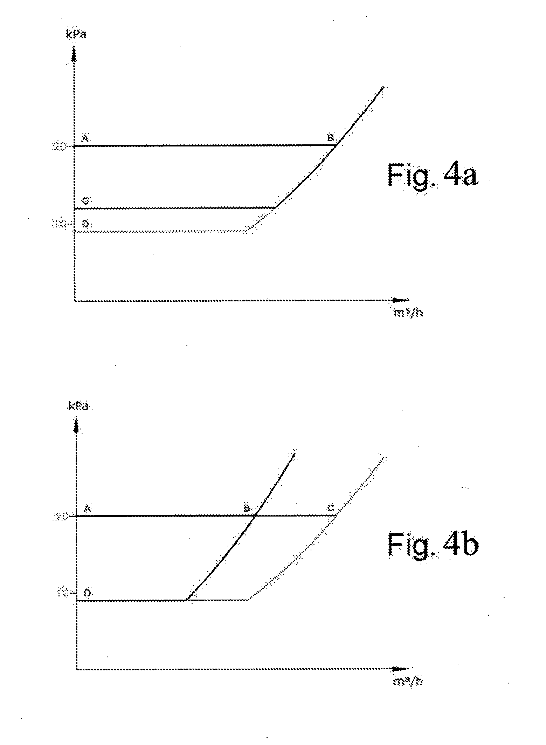

It is to be understood that the pressure increase should be relatively large in order for the magnets to be separated from each other, whereupon a counterforce becomes significantly lower so that the valve closes again at a relatively low pressure. This will be explained in more detail in conjunction with Figs 4a and 4b.

According to the invention, the valve body 1 is hollow and comprises holes 12 so that the gas pressure in the tank also is, via the holes 12, present in a cavity 11. A secondary valve, comprising a valve body 6 that is arranged in a guide (not shown) and loaded by means of a spring 8 in such a way that the valve body 6 rests against a valve seat 7 for as long as the pressure in the cargo tank cannot overcome the force from the spring 8 and the valve body's 6 own weight, is provided in the top of the hollow valve body 1. When the pressure in the cargo tank increases, the secondary valve will open gradually.

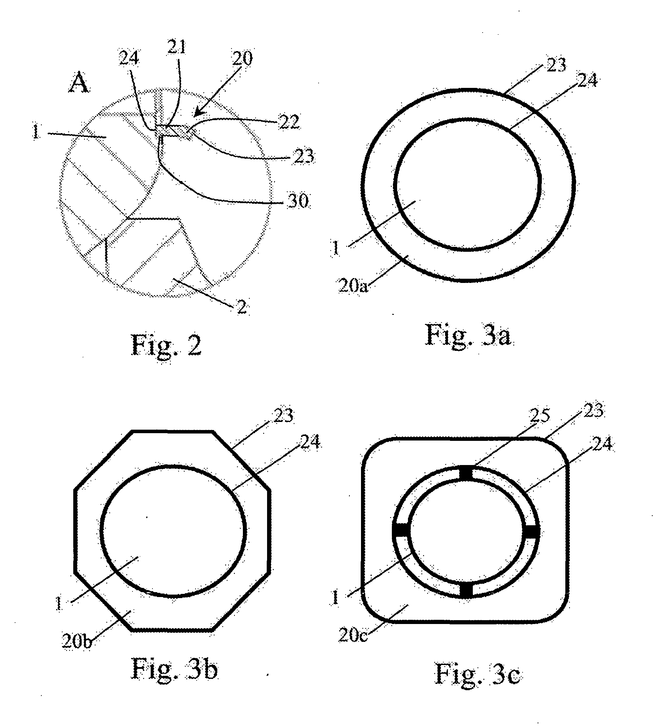

Fig. 2 shows an enlarged view of the area of the valve body 1 comprising the lifting element 20 shown as the section A on Fig. 1. As can be seen the lifting element 20 is arranged in a notch 30 adapted for receiving the lifting element 20 and it comprises seen in cross section a first section 21 with an inner edge 24 and a second section 22 with an outer edge 23 facing opposite the inner edge 24. The first section 21 is adapted for abutment with or connection or attachment to the valve body 1. The first and second sections 21, 22 are as shown rectangular in cross section, i.e. the edges conneting the inner and outer edge 24, 23 are substantially parallel, but may in principle have any suitable shape, i.e. the edges conneting the inner and outer edge 24, 23 may also be non-parallel. The second section 22 may be straight, but preferably and as shown on Fig. 2, the second section 22 comprises a curvature or an inclination with respect to the first section 21, such that when the lifting element 20 is connected with the valve body 1 the second section 22 bends slightly towards the valve seat 2.

In an embodiment where the first section 21 is adapted for abutment with the valve body 1, the lifting element 20 may simply be inserted loosely into and held by the notch 30.

In alternative or additional embodiments where the first section is adapted for connection or attachment to the valve body, the lifting element is connected or attached to the valve body by means of any suitable attachment means, such as a snap-locking or a thread-based attachment means, by means of an adhesive, preferably a water resistant adhesive, or welding. Alternatively the lifting element may be provided in one piece with the valve body, e.g. by casting or moulding.

Figs. 3a-3c show top views of three different embodiments of a lifting element 20. As may be seen the lifting element 20 is substantially ring shaped with an outer edge 23 and an inner edge 24. Other feasible shapes of the lifting element include, but are not limited to, disc-shaped, plate-shaped and toroidal as well as segments of any of the shapes mentioned.

The inner edge 24 has a shape adapted for following the contour of the outer circumferential part of the valve body 1 along the complete circumference of the valve body 1. Thus, as the valve body 1 as shown is circular in cross section, the inner edge 24 is likewise circular. Other shapes including shapes which only partially follow the contour of the outer circumferential part of the valve body as well as shapes adapted to follow the conotur of valve bodies with other shapes than circular in corss section are however also possible.

The outer edge 23 is likewise, and as shown on Fig. 3a, circular. However, the outer edge 23 may in principle have any desired shape, such as e.g. an angled shape comprising edges with angled corners exemplified by the octangular shape shown in Fig. 3b or an angled shape comprising edges with rounded corners exemplified by the rounded rectangular shape shown in Fig. 3c.

In a further embodiment as shown on Fig. 3c, the inner edge 24 is connected to the valve body 1 by means of a plurality, preferably at least two and in the embodiment shown four, connecting elements 25. In this embodiment, the notch 30 provided in the valve body may be provided as several separate notches each corresponding to a connecting element 25.

The lifting element 20 is made of a rigid material, e.g. a metal such as stainless steel or aluminium, and is preferably made of the same material as the valve body 1.

The lifting element 20 comprises a thickness of at least 0.5 mm, preferably at least 1 mm, more preferably at least 2 mm and most preferably at least 5 mm and/or less than 30 mm, preferably less than 20 mm, more preferably less than 15 mm and most preferably less than 10 mm, although other boundary values for the thicknes are likewise feasible.

The lifting element 20 comprises a diameter defined as the distance between mutually opposite points on the outer edge 23 of at least 50 mm, preferably at least 100 mm, more preferably at least 150 mm and most preferably at least 200 mm and/or less than 1000 mm, preferably less than 500 mm, more preferably less than 400 mm and most preferably less than 300 mm, although other boundary values for the diameter are likewise feasible.

Furthermore, it is noted that the preferred size of the lifting element depends on the actual size of the valve body in such a way that, generally speaking, the larger the lifting element is compared to the size of the valve body, the better the lifting effect. However, the inventors have observed that an upper practical limit for the size of the lifting element does exist, above which the formation of turbulences in the vicinity of the lifting element increases to a level at which the lifting effect may be compromized, the lifting element may experience overheating during fire-related conditions and/or the gases to be vented out may be expelled in a such a way, and particularly direction, that the venting effect is compromized.

By way of example, the ratio between the diameter of the lifting element defined as the distance between diametrically opposed points on the outer edge and the diameter of the valve body defined as the distance between diametrically opposed points on the outer periphery of the valve body where the lifting element is arranged is at least 1,01, preferably at least 1,05, more preferably at least 1,08, even more preferably at least 1,1 and most preferably at least 1,15 and according to the invention less than 1,16.

By way of another example, the ratio between the diameter of the lifting element defined as the distance between diametrically opposed points on the outer edge and the largest diameter of the valve body defined as the distance between diametrically opposed points on the outer periphery of the valve body where its cross ectional area is the largest is at least 1,01, preferably at least 1,05, more preferably at least 1,08, even more preferably at least 1,1 and most preferably at least 1,15 and/or less than 1,7, preferably less than 1,5, more preferably less than 1,2 and most preferably less than 1,16, although other other boundary values for the said ratio are likewise feasible.

The valve according to the invention will have an open/close curve or characteristic as shown in Fig 4a, in which the open/close curve of an otherwise identical prior art valve with no lifting element is also shown for comparison of the closing points of the respective valves. In Fig. 4a:
A: Describes the opening point of both valves, determined by the mass of the valve body and the magnetic force (set in this example at 20 kPa).
B: Describes the capacity at opening pressure of both valves.
C: Describes the closing point of the valve with no lifting element, which for the valve tested is at about 12 kPa.
D: Describes the closing point of the valve according to the invention, which for the valve tested is at about 9 kPa.

When a pressure increase occurs in the tank, and the pressure exceeds the point of balance between the upwards directed force on the conical body and the downwards directed gravitational force on the conical body and magnetic force, the conical body will move upwards, at which the magnetic force will decrease and the conical body will rise further. The pressure under the conical body decreases to a point, which is not shown, and which is only characterized by the mass of the conical body. Subsequently the curve continues to point B, where the valve is fully open. The curve is subsequently followed to a not shown point of balance, which is situated above point B on the curve, is reached.

When the pressure begins to decrease in the tank, the curve is then followed back to point B, and further on downwards until the valve ultmatively closes at point C or D, depending on whether a lifting element according to the invention is provided or not.

As can be seen from Fig. 4a, and as described above, the closing point D of a valve according to the invention occurs at a significantly lower pressure than the closing point C of a prior art valve with no lifting element.

In the example shown the closing point D occurs at a pressure of about 9 kPa, while the closing point C occurs at a pressure of about 12 kPa. This difference corresponds to a closing pressure of a valve according to the invention being 25 % lower than for the prior art valve, which in turn corresponds to an increase of 25 % in the venting effect.

Fig 4b is a graph in which the open/close curve or characteristic of a valve according to the invention and the open/close curve of an otherwise identical prior art valve with a lifting plate arranged internally in the flow passage of the valve is shown for comparison. In Fig. 4b:
A: Describes the opening point of both valves, determined by the mass of the valve body and the magnetic force (set in this example at 20 kPa).
B: Describes the capacity at opening pressure of the prior art valve with a lifting plate arranged internally in the flow passage of the valve.
C: Describes the capacity at opening pressure of a valve with an extenal lifting element according to the invention.
D: Describes the closing point of both valves, namely the mass of the valve body (set in this example at about 9 kPa).

As can be seen from Fig. 4b, the capacity C at opening pressure of a valve according to the invention is significantly larger than the capacity B at opening pressure of a prior art valve with a lifting plate arranged internally in the flow passage of the valve.

By way of example the capacity C of one valve according to the invention has been experimentally shown to be about 3000 m³/h, while the capacity B of an otherwise identical prior art valve with a lifting plate arranged internally in the flow passage of the valve has been shown to be anout 2500 m³/h. This difference corresponds to an increase of about 20 % in the capacity at opening pressure.

Fig. 5 shows an alternative embodiment of a valve according to the invention. In the following this valve will only be described in regard to the aspects in which it differs from the valve shown in Fig. 1 and described above.

The valve shown in Fig 5 is adapted to immediately increase the magnetic gap as much as possible for thereby to ensure that the magnetic force decreases in consequence of the increased distance in the magnetic gap. This is achieved by means of a substantially cylindrical region 13 on the valve body 1, which region is adapted to interact with a skirt 14 on the valve seat 2. The skirt could also be integrated with the valve housing 3, dependent on mutual construction of the valve seat 2 and the valve housing 3. The outer contour of the cylindrical part 13 and the inner contour of the skirt 14 correspond to one another so that there is an utterly small air gap between them. A small amount of air will flow out between the valve body and the seat when the valve starts to open, but the magnetic force would still be relatively large in consequence of the small gap between the magnets 4a and 4b. However, the cylindrical part 13 has larger diameter than the clearance hole in the valve seat 2 and the enlarged area implies that the upwards directed force forces the valve body to a larger height of lift and, consequently, a larger magnetic gap than what the height of lift would be without the skirt 14.

The position of the magnets may be changed by means of an adjustment element 5 shown as discs in fig. 5, in order to adjust the valve to the current requirement.

The skirt is particularly justified when the valve is mounted on long pipes, since the gas pressure on the valve is decisive for determining the allowable length of the pipe that fulfils the requirement that the valve doesn't oscillate faster than 0.5 Hz. The pipe length may be significantly increased by mounting the skirt, since the relatively lower gas pressure, that is a consequence of the friction in the pipe, would still be sufficient to keep the valve in open position.

It is to be understood that the substantially cylindrical part does not have to be completely cylindrical. It could, for instance, be polygonal and a corresponding skirt would have analogous technical effect. In consequence of the valve body most often being rotationally symmetric, the term "substantially cylindrical region" has been used.

In this embodiment the lifting element 20 is arranged on the valve body 1 in such a way that when the valve body 1 rests against the valve seat 2, the lifting element is placed in a distance from the skirt 14.

In an alternative, the lifting element is placed on a section of the valve body above the cylindrical part, and most preferably where the circumference of the valve body is the largest.

## Claims

1. A venting valve for cargo tanks in, for instance, oil tankers, said valve comprising a valve housing (3) with an axially movable valve body (1) and a thereto associated valve seat (2), wherein the position of the valve body (1) relative to the valve seat (2) is dependent on the pressure in the cargo tank, the valve further comprising magnets (4a, 4b) provided on the valve body (1) and in the valve housing (3), respectively, in such a way that the magnetic force seeks to hold the valve body (1) downwards against the valve seat (2), **characterized in that**, the valve comprises a lifting element (20) comprising a first section (21) with an inner edge (24) and a second section (22) with an outer edge (23), the lifting element (20) being arranged such as to extend at least partially, and preferably completely, around an outer circumferential part of the valve body (1) above the valve seat (2), **in that** the lifting element (20) is arranged on the valve body (1), preferably on a bottom part of the valve body (1), in such a way that when the valve body (1) rests against the valve seat (2), the lifting element (20) is placed in a distance from the valve seat (2), and **in that** the ratio between the diameter of the lifting element (20) defined as the distance between diametrically opposed points on the outer edge (24) and the diameter of the valve body (1) defined as the distance between diametrically opposed points on the outer periphery of the valve body (1) where the lifting element (20) is arranged is less than 1,16.

2. A valve according to claim 1, **characterized in that**, the lifting element (20) is placed externally on the valve.

3. A valve according to claim 1 or 2, **characterized in that**, the lifting element (20) does not take up space in the interior of the valve housing (3).

4. A valve according to any one of claims 1-3, **characterized in that**, the lifting element (20) is arranged such as to be in direct contact with the ambient air.

5. A valve according to any one of claims 1-4, **characterized in that**, the lifting element (20) is placed externally on the valve with respect to a flow passage of the valve.

6. A valve according to any one of claims 1-5, **characterized in that**, the lifting element (20) is any one of ring-shaped, disc-shaped, plate-shaped, toroidal and segments of any one or more thereof.

7. A valve according to any one of claims 1-6, **characterized in that**, the lifting element (20) is arranged on the valve body (1) where the circumference of the valve body is largest.

8. A valve according to any one of claims 1-7, **characterized in that**, the second section (22) of the lifting element (20) comprises a curvature or an inclination with respect to the first section (20), such that when the lifting element (20) is connected with the valve body (1) the second section (22) is bent towards the valve seat (2).

9. A valve according to any one of claims 1-8, **characterized in that**, the first section (21) of the lifting element (20) is adapted for holding abutment with or connection or attachment to the valve body (1) by means of any one or more of a snap-locking or a thread-based attachment means, an adhesive, welding and a notch provided in the valve body (1) and adapted for receiving the first sec-tion (21) of the lifting element (20) and/or that the lifting element (20) is provided in one piece with the valve body (1), e.g. by casting or moulding.

10. A valve according to any one of claims 1-9, **characterized in that** the inner edge (24) of the lifting element (20) is provided with a shape adapted for following the contour of the outer circumferential part of the valve body (1) along at least a part of the circumference of the valve body (1), and preferably along the complete circumference of the valve body (1), or
the inner edge (24) of the lifting element (20) is connected to the valve body (1) by means of a plurality, preferably at least two, connecting elements and/or that the valve body (1) is provided with several separate notches each corresponding to one of the plurality of connecting elements.

11. A valve according to any one of claims 1-10, **characterized in that**, the valve body (1) is hollow and adapted to receive a further valve body (6), and that, for interaction with the further valve body (6), a further valve seat (7) is provided at the end of the valve body (1) that extends outside the valve or the valve housing (3), wherein the characteristics of the interacting valve body/valve seat and the further valve body/valve seat respectively are mutually different.

12. A valve according to any one of claims 1-11, **characterized in that**, the valve body (1) and the valve housing (3), viewed in an axial section, are shaped in such a way that the flow area between said parts is dependent on the position of the valve body (1) in the valve housing (3).

13. A valve according to any one of claims 11-12, **characterized in that**, the further valve body (6) is concentrically arranged in the valve body (1) and adapted for axial movement relative to the further valve seat (7) that is provided at the end of the valve body (1) that extends outside the valve or the valve housing (3), and that channels are provided in the valve body (1) in such a way that the pressure in the cargo tank actuates the further valve body (6) away from the further valve seat (7).

14. A valve according to anyone of claims 1-13, wherein the valve interacts with the valve seat (2) in a place that is located between the magnets and an outer part of the valve body (1), **characterized in that**, the outer part of the valve body comprises a substantially cylindrical region that has a larger diameter than the clearance hole in the valve seat (2) and that is adapted to interact with a projecting skirt on the valve housing (3), wherein the outer contour of the cylindrical region corresponds to the inner contour of the skirt.

## Patentansprüche

1. Entlüftungsventil für Ladetanks, zum Beispiel in Öltankern, wobei das Ventil ein Ventilgehäuse (3) mit einem axial bewegbaren Ventilkörper (1) und einem diesem zugeordneten Ventilsitz (2) umfasst, wobei die Position des Ventilkörpers (1) relativ zu dem Ventilsitz (2) von dem Druck in dem Ladetank abhängt, wobei das Ventil ferner Magnete (4a, 4b) umfasst, die jeweils auf dem Ventilkörper (1) und in dem Ventilgehäuse (3) derart vorgesehen sind, dass die Magnetkraft versucht, den Ventilkörper (1) abwärts gegen den Ventilsitz (2) zu halten, **dadurch gekennzeichnet, dass** das Ventil ein Hubelement (20) umfasst, das einen ersten Abschnitt (21) mit einer Innenkante (24) und einen zweiten Abschnitt (22) mit einer Außenkante (23) umfasst, wobei das Hubelement (20) derart angeordnet ist, dass es sich mindestens teilweise und vorzugsweise vollständig um einen äußeren umfänglichen Teil des Ventilkörpers (1) oberhalb des Ventilsitzes (2) erstreckt, dass das Hubelement (20) auf dem Ventilkörper (1), vorzugsweise auf einem Bodenteil des Ventilkörpers (1) derart angeordnet ist, dass, wenn der Ventilkörper (1) gegen den Ventilsitz (2) anliegt, das Hubelement (20) in einem Abstand von dem Ventilsitz (2) platziert ist, und dass das Verhältnis zwischen dem Durchmesser des Hubelements (20), definiert als der Abstand zwischen diametral entgegengesetzten Stellen auf der Außenkante (23) und dem Durchmesser des Ventilkörpers (1), definiert als der Abstand zwischen diametral entgegengesetzten Stellen auf dem äußeren Umfang des Ventilkörpers (1), wo das Hubelement (20) angeordnet ist, kleiner ist als 1,16.

2. Ventil nach Anspruch 1, **dadurch gekennzeichnet, dass** das Hubelement (20) außerhalb auf dem Ventil platziert ist.

3. Ventil nach Anspruch 1 oder 2, **dadurch gekennzeichnet, dass** das Hubelement (20) im Inneren des Ventilgehäuses (3) keinen Platz beansprucht.

4. Ventil nach einem der Ansprüche 1 bis 3, **dadurch gekennzeichnet, dass** das Hubelement (20) derart angeordnet ist, dass es in direkter Berührung mit der Umgebungsluft ist.

5. Ventil nach einem der Ansprüche 1 bis 4, **dadurch gekennzeichnet, dass** das Hubelement (20) außerhalb auf dem Ventil in Bezug auf eine Strömungspassage des Ventils platziert ist.

6. Ventil nach einem der Ansprüche 1 bis 5, **dadurch gekennzeichnet, dass** das Hubelement (20) irgendeines von einem ringförmigen, scheibenförmigen, plattenförmigen, torischen und Segmente irgendeines oder mehrerer dieser ist.

7. Ventil nach einem der Ansprüche 1 bis 6, **dadurch gekennzeichnet, dass** das Hubelement (20) auf dem Ventilkörper (1) da angeordnet ist, wo der Umfang des Ventilkörpers am größten ist.

8. Ventil nach einem der Ansprüche 1 bis 7, **dadurch gekennzeichnet, dass** der zweite Abschnitt (22) des Hubelements (20) eine Krümmung oder eine Neigung in Bezug zu dem ersten Abschnitt (21) derart umfasst, dass, wenn das Hubelement (20) mit dem Ventilkörper (1) verbunden ist, der zweite Abschnitt (22) zu dem Ventilsitz (2) gebogen ist.

9. Ventil nach einem der Ansprüche 1 bis 8, **dadurch gekennzeichnet, dass** der erste Abschnitt (21) des Hubelements (20) angepasst ist, um den Anschlag mit oder die Verbindung oder Befestigung an dem Ventilkörper (1) mittels irgendeiner oder mehrerer einer Schnappverriegelung oder eines gewindebasierten Befestigungsmittels, eines Klebstoffs, Schweißen und einer Kerbe, die in dem Ventilkörper (1) vorgesehen und angepasst ist, um den ersten Abschnitt (21) des Hubelements (20) aufzunehmen, zu halten, und/oder dass das Hubelement (20) als ein Teil mit dem Ventilkörper (1) zum Beispiel durch Guss oder Formen bereitgestellt wird.

10. Ventil nach einem der Ansprüche 1 bis 9, **dadurch gekennzeichnet, dass** die Innenkante (24) des Hubelements (20) mit einer Form versehen ist, die angepasst ist, um der Kontur des äußeren umfänglichen Teils des Ventilkörpers (1) entlang mindestens eines Teils des Umfangs des Ventilkörpers (1) zu folgen und vorzugsweise entlang des vollständigen Umfangs des Ventilkörpers (1), oder
die Innenkante (24) des Hubelements (20) mit dem Ventilkörper (1) mittels einer Mehrzahl, vorzugsweise mindestens zwei, von Verbindungselementen verbunden ist, und/oder dass der Ventilkörper (1) mit mehreren getrennten Kerben versehen ist, die jeweils einem der Mehrzahl von Verbindungselementen entsprechen.

11. Ventil nach einem der Ansprüche 1 bis 10, **dadurch gekennzeichnet, dass** der Ventilkörper (1) hohl und angepasst ist, um einen weiteren Ventilkörper (6) aufzunehmen, und dass zur Wechselwirkung mit dem weiteren Ventilkörper (6) ein weiterer Ventilsitz (7) an dem Ende des Ventilkörpers (1) vorgesehen ist, der sich außerhalb des Ventils oder des Ventilgehäuses (3) erstreckt, wobei die Merkmale des Wechselwirkens des Ventilkörpers/Ventilsitzes und des weiteren Ventilkörpers/Ventilsitzes jeweils voneinander unterschiedlich sind.

12. Ventil nach einem der Ansprüche 1 bis 11, **dadurch gekennzeichnet, dass** der Ventilkörper (1) und das Ventilgehäuse (3) in einem axialen Schnitt gesehen derart geformt sind, dass der Strömungsbereich zwischen den Teilen von der Position des Ventilkörpers (1) in dem Ventilgehäuse (3) abhängt.

13. Ventil nach einem der Ansprüche 11 bis 12, **dadurch gekennzeichnet, dass** der weitere Ventilkörper (6) konzentrisch in dem Ventilkörper (1) angeordnet und zur axialen Bewegung relativ zu dem weiteren Ventilsitz (7) angepasst ist, der an dem Ende des Ventilkörpers (1) vorgesehen ist, der sich außerhalb des Ventils oder des Ventilgehäuses (3) erstreckt, und dass Kanäle in dem Ventilkörper (1) derart vorgesehen sind, dass der Druck in dem Lagertank den weiteren Ventilkörper (6) von dem weiteren Ventilsitz (7) weg betätigt.

14. Ventil nach einem der Ansprüche 1 bis 13, wobei das Ventil mit dem Ventilsitz (2) an einer Stelle zusammenwirkt, die sich zwischen den Magneten und einem äußeren Teil des Ventilkörpers (1) befindet, **dadurch gekennzeichnet, dass** der äußere Teil des Ventilkörpers einen im Wesentlichen zylindrischen Bereich umfasst, der einen größeren Durchmesser hat als das Durchgangsloch in dem Ventilsitz (2), und der angepasst ist, um mit einer vorstehenden Schürze auf dem Ventilgehäuse (3) zusammenzuwirken, wobei die Außenkontur des zylindrischen Bereichs der Innenkontur der Schürze entspricht.

## Revendications

1. Soupape d'évent pour citernes de cargaison, par exemple dans des pétroliers, ladite soupape comprenant un boîtier de soupape (3) avec un corps de soupape (1) déplaçable axialement et un siège de soupape (2) associé à celui-ci, la position du corps de soupape (1) par rapport au siège de soupape (2) dépendant de la pression dans la citerne de cargaison, la soupape comprenant en outre des aimants (4a, 4b) prévus sur le corps de soupape (1) et dans le boîtier de soupape (3), respectivement, de telle sorte que la force magnétique ait tendance à retenir le corps de soupape (1) vers le bas contre le siège de soupape (2), **caractérisée en ce que** la soupape comprend un élément de levage (20) comprenant une première section (21) avec un bord intérieur (24) et une deuxième section (22) avec un bord extérieur (23), l'élément de levage (20) étant agencé de manière à s'étendre au moins en partie, et de préférence complètement, autour d'une partie circonférentielle extérieure du corps de soupape (1) au-dessus du siège de soupape (2), **en ce que** l'élément de levage (20) est agencé sur le corps de soupape (1), de préférence sur une partie inférieure du corps de soupape (1), de telle sorte que lorsque le corps de soupape (1) repose contre le siège de soupape (2), l'élément de levage (20) soit placé à distance du siège de soupape (2), et **en ce que** le rapport entre le diamètre de l'élément de levage (20) défini comme la distance entre des points diamétralement opposés sur le bord extérieur (23) et le diamètre du corps de soupape (1) défini comme la distance entre des points diamétralement opposés sur la périphérie extérieure du corps de soupape (1) à l'endroit où est agencé l'élément de levage (20), est inférieur à 1,16.

2. Soupape selon la revendication 1, **caractérisée en ce que** l'élément de levage (20) est placé à l'extérieur sur la soupape.

3. Soupape selon la revendication 1 ou 2, **caractérisée en ce que** l'élément de levage (20) ne prend pas de place à l'intérieur du boîtier de soupape (3).

4. Soupape selon l'une quelconque des revendications 1 à 3, **caractérisée en ce que** l'élément de levage (20) est agencé de manière à être en contact direct avec l'air ambiant.

5. Soupape selon l'une quelconque des revendications 1 à 4, **caractérisée en ce que** l'élément de levage (20) est placé à l'extérieur sur la soupape par rapport à un passage d'écoulement de la soupape.

6. Soupape selon l'une quelconque des revendications 1 à 5, **caractérisée en ce que** l'élément de levage (20) est l'un quelconque parmi un élément de forme annulaire, en forme de disque, en forme de plaque, toroïdal et un élément sous forme de segments de l'une quelconque ou plusieurs desdites formes.

7. Soupape selon l'une quelconque des revendications 1 à 6, **caractérisée en ce que** l'élément de levage (20) est agencé sur le corps de soupape (1) à l'endroit où la circonférence du corps de soupape est la plus grande.

8. Soupape selon l'une quelconque des revendications 1 à 7, **caractérisée en ce que** la deuxième section (22) de l'élément de levage (20) comprend une courbure ou une inclinaison par rapport à la première section (21) de telle sorte que lorsque l'élément de levage (20) est connecté au corps de soupape (1), la deuxième section (22) soit courbée vers le siège de soupape (2).

9. Soupape selon l'une quelconque des revendications 1 à 8, **caractérisée en ce que** la première section (21) de l'élément de levage (20) est prévue pour maintenir un aboutement ou une connexion ou une fixation au corps de soupape (1) au moyen de l'un quelconque ou plusieurs parmi un moyen d'encliquetage ou un moyen de fixation par filetage, un adhésif, un soudage et une encoche prévue dans le corps de soupape (1) et prévue pour recevoir la première section (21) de l'élément de levage (20) et/ou **en ce que** l'élément de levage (20) est réalisé d'une seule pièce avec le corps de soupape (1), par exemple par coulée ou moulage.

10. Soupape selon l'une quelconque des revendications 1 à 9, **caractérisée en ce que** le bord intérieur (24) de l'élément de levage (20) présente une forme prévue pour suivre le contour de la partie circonférentielle extérieure du corps de soupape (1) le long d'au moins une partie de la circonférence du corps de soupape (1) et de préférence le long de la totalité de la circonférence du corps de soupape (1), ou
le bord intérieur (24) de l'élément de levage (20) est connecté au corps de soupape (1) au moyen d'une pluralité d'éléments de connexion, de préférence d'au moins deux éléments de connexion, et/ou **en ce que** le corps de soupape (1) est pourvu de plusieurs encoches séparées correspondant chacune à l'un de la pluralité des éléments de connexion.

11. Soupape selon l'une quelconque des revendications 1 à 10, **caractérisée en ce que** le corps de soupape (1) est creux et est prévu pour recevoir un corps de soupape supplémentaire (6), et **en ce que**, pour l'interaction avec le corps de soupape supplémentaire (6), un siège de soupape supplémentaire (7) est prévu à l'extrémité du corps de soupape (1) qui s'étend à l'extérieur de la soupape ou du boîtier de soupape (3), les caractéristiques des corps de soupape/siège de soupape coopérants et corps de soupape supplémentaire/siège de soupape supplémentaire, respectivement, étant mutuellement différentes.

12. Soupape selon l'une quelconque des revendications 1 à 11, **caractérisée en ce que** le corps de soupape (1) et le boîtier de soupape (3), vus en coupe axiale, présentent une forme telle que la section d'écoulement entre lesdites parties dépend de la position du corps de soupape (1) dans le boîtier de soupape (3).

13. Soupape selon l'une quelconque des revendications 11 et 12, **caractérisée en ce que** le corps de soupape supplémentaire (6) est agencé de manière concentrique dans le corps de soupape (1) et est prévu pour se déplacer axialement par rapport au siège de soupape supplémentaire (7) qui est prévu à l'extrémité du corps de soupape (1) qui s'étend à l'extérieur de la soupape ou du boîtier de soupape (3), et **en ce que** des canaux sont prévus dans le corps de soupape (1) de telle sorte que la pression dans la citerne de cargaison actionne le corps de soupape supplémentaire (6) à l'écart du siège de soupape supplémentaire (7).

14. Soupape selon l'une quelconque des revendications 1 à 13, dans laquelle la soupape coopère avec le siège de soupape (2) à un emplacement qui est situé entre les aimants et une partie extérieure du corps de soupape (1), **caractérisée en ce que** la partie extérieure du corps de soupape comprend une région substantiellement cylindrique qui présente un plus grand diamètre que le trou de dégagement dans le siège de soupape (2) et qui est prévue pour coopérer avec une jupe saillante sur le boîtier de soupape (3), le contour extérieur de la région cylindrique correspondant au contour intérieur de la jupe.
